# EUROPEAN PATENT APPLICATION

(11) **EP 4 667 247 A1**
(43) Date of publication of application: **24.12.2025**
(21) Application number: 25183330.7
(22) Date of filing: 17.06.2025
(51) Int. Cl.: B60G 11/27

(54) **TRUCK TRAILER COMPRISING A WHEEL MOUNT ARRANGEMENT FOR NON-STEERABLE WHEELS**

(30) Priority: 20.06.2024 DK PA202430334
(71) Applicant: MTDK A/S, 8940 Randers SV (DK)
(72) Inventor: Tang, Morten, 8870 Langå (DK)
(74) Representative: Andreasen, Søren Laursen Vasegaard

(57) **Abstract**

A truck trailer (20) comprising a having a chassis (34), a trailer bed (32), several non-steerable wheels (10) and a wheel mount arrangement (2) for each non-steerable wheel (10) is disclosed. Each wheel mount arrangement (2) comprises a non-steerable wheel (10) that comprises a tyre (4) mounted on a wheel rim (8) having a mounting plate (6) configured to be attached to an axle member (16) of the truck trailer (20). The tyre (4) comprises:
A) a side portion (22) comprising the part of the tyre (4) that contacts the ground during driving and B) a rear portion (24) facing towards a side structure (33, 33') of the chassis (34) and extending between the side portion (22) and the wheel rim (8).

The wheel mount arrangement (2) has a width (W₁) extending between a front side (21) of the tyre (4) and the nearest side structure (33, 33') of the chassis (34). The axle member (16) is suspended in a pendulum suspension (26), wherein the axle member (16) is connected to or supported by the pendulum suspension (26) at one end, wherein the axle member (16) extends outward from the pendulum suspension (26) to the wheel (10), where the non-steerable wheel (10) is physically attached to the axle member (16). The wheel mount arrangement (2) comprises space (14) extending along the side portion (22) of the tyre (4) and along the rear portion (24) of the tyre (4), said space situated between said pendulum suspension (26) and on the other side said side portion (22) and said rear portion (24), wherein the width (D₂), of the space (14) is at least 30 mm configured to enable a snow chain (30) to be mounted onto the non-steerable wheel (10) and to drive the truck trailer (20) while the snow chain (30) is mounted onto the non-steerable wheel (10).

## Description

### Field of invention

The present invention relates to a truck trailer having a plurality of pairs of ground engaging wheels.

### Prior art

Truck trailers are designed for transporting goods over long distances. Among truck trailers, box trailers are very popular due to their enclosed design with a roof and sides, used for protecting cargo from the elements.

Snow chains are a vital tool for truck trailers operating in snowy and icy conditions, providing necessary traction and enhancing safety. Proper use, adherence to legal requirements, and regular maintenance are essential for their effective operation. Accordingly, the use of snow chains in truck trailers is mandatory in several countries, particularly in regions with heavy snowfall and icy conditions. The regulations can vary not only by country but also by region within a country, especially in mountainous or high-altitude areas. Here are some examples of countries where the use of snow chains can be mandatory:
In Austria, snow chains are mandatory on certain roads and mountain passes when indicated by traffic signs. Generally required from November 1 to April 15, especially in alpine regions.

In France, snow chains are mandatory in specific mountainous regions (e.g., the Alps and Pyrenees) when indicated by road signs. From November 1, 2021, certain mountainous areas have required vehicles to carry snow chains or have winter tires.

In Germany snow chains are mandatory when driving conditions are severe, particularly in mountainous areas. Indicated by signs that show a snow chain symbol.

In Italy, snow chains are required in mountainous regions (e.g., the Alps and Apennines) during winter months, typically from November 15 to April 15. Signs will indicate when snow chains are mandatory.

In Norway snow chains must be carried and used when conditions require them, particularly in northern and mountainous areas. Studded tires are also commonly used.

In Switzerland snow chains are mandatory on certain roads when indicated by signs, especially in the alpine regions. From November 1 to April 30, it's advisable to carry snow chains.

Snow chains are essential safety devices used on truck trailers to improve traction on snow- and ice-covered roads. Their primary function is to provide additional grip to the tires, thereby enhancing the vehicle's ability to manoeuvre and stop in adverse weather conditions.

Snow chains are designed to dig into the snow and ice, preventing the tires from slipping and providing better control over the vehicle. Snow chains help in maintaining stability and reducing the risk of accidents by improving braking performance and cornering grip on slippery surfaces.

As described, in many regions, there are specific regulations regarding the use of snow chains on commercial vehicles, especially in mountainous or northern areas where snow and ice are common. Some areas may require the use of snow chains during certain weather conditions or seasons, and there may be designated chain-up areas where drivers can safely install them. After use, snow chains should be cleaned to remove any road salt or debris that could cause rust or corrosion.

In conventional truck trailer configurations, particularly those complying with standard dimensional and component specifications, the use of snow chains on the trailer wheels is technically impractical due to inherent space limitations and established design practices.

Specifically, truck trailers are often constructed such that:
- the outer width of the trailer, measured from the outer sides of the wheels, does not exceed 2542 mm, in accordance with legal vehicle width limits in many jurisdictions;
- the inner width of the trailer bed is no less than 1514 mm, to allow for cargo capacity and structural requirements (In European standard truck trailers where the trailer bed extends across or between the non-steerable wheel pairs, the inner width of the bed section in this area is typically around 1510 mm to 1540 mm);
- each wheel assembly typically includes a wheel, a type 24"/30" brake actuator, and an air spring, which are mounted in close spatial proximity.

Within these constraints, the total available width on each side of the trailer for housing the suspension, brake, and wheel components is limited to approximately 514 mm (i.e., half the difference between the total trailer width and inner trailer bed width). However, the combined width of a standard trailer tire (e.g. 385 mm), air spring (approximately 200 mm), and brake actuator (approximately 250-280 mm) approaches or exceeds this limit, leaving no practical clearance for the addition of snow chains.

Furthermore, snow chains typically increase the effective width of a wheel assembly by 40-60 mm on each side, due to chain link thickness and required safety clearance. Mounting snow chains in such configurations would cause mechanical interference with nearby components, including the air spring, brake actuator housing, and suspension mounts, leading to potential operational failure and safety risks.

As a consequence, in the technical field of truck trailer design, there exists a technical prejudice against the use of snow chains in such configurations. It is widely accepted by practitioners that standard trailer axles equipped with full-sized brake actuators and air suspension do not allow for the installation or use of snow chains without structural modifications. This understanding has become part of the prevailing design philosophy, further reinforced by the lack of commercial trailer models configured to accommodate chains under these constraints.

Accordingly, there exists a need for suspension or chassis designs that either eliminate the above limitations, or provide a functionally equivalent means of improving traction and braking performance in slippery conditions without relying on snow chains

It is an object of the present invention to provide a truck trailer that reduces or even eliminates the above mentioned disadvantages of the prior art.

### Summary of the invention

The object of the present invention can be achieved by a truck trailer as defined in claim 1. Preferred embodiments are defined in the dependent subclaims, explained in the following description and illustrated in the accompanying drawings.

The wheel mount arrangement according to the invention is a truck trailer comprising a having a chassis, a trailer bed, several non-steerable wheels and a wheel mount arrangement for each non-steerable wheel, wherein each wheel mount arrangement comprises a non-steerable wheel that comprises a tyre mounted on a wheel rim having a mounting plate configured to be attached to an axle member of the truck trailer,
wherein the tyre comprises:
   - a side portion comprising the part of the tyre that contacts the ground during driving; and
   - a rear portion facing towards a side structure of the chassis and extending between the side portion and the wheel rim,
wherein the wheel mount arrangement has a width extending between a front side of the tyre and the nearest side structure of the chassis,
wherein the axle member is suspended in a pendulum suspension, wherein the axle member is connected to or supported by the pendulum suspension at one end, wherein the axle member extends outward from the pendulum suspension to the wheel, where the non-steerable wheel is physically attached to the axle member,
wherein the wheel mount arrangement comprises a:
   - space extending along the side portion of the tyre and along the rear portion of the tyre, said space situated between said pendulum suspension and on the other side said side portion and said rear portion, wherein the width, of the space is at least 20 mm configured to enable a snow chain to be mounted onto the non-steerable wheel and to drive the truck trailer while the snow chain is mounted onto the non-steerable wheel.

Hereby, it is possible to provide a truck trailer enabling:
- mounting of a snow chain on the non-steerable wheel and
- driving the truck trailer while the snow chain is mounted on the non-steerable wheel.

In an embodiment, the width, of the space is at least 25 mm.

In an embodiment, the width, of the space is at least 30 mm.

In an embodiment, the width, of the space is at least 35 mm.

In an embodiment, the width, of the space is at least 40 mm.

Typically, a truck trailer comprises a plurality of pairs of non-steerable wheels. Accordingly, the space provided around and behind the non-steerable wheels achieved by using a wheel mount arrangement according to the invention will enable mounting and using snow chains to all non-steerable wheels of the truck trailer.

The term "the axle member is suspended in a pendulum suspension" means that the axle is supported in such a way that it can swing or pivot like a pendulum relative to the vehicle chassis or frame. In a pendulum suspension, each wheel is mounted on an arm that pivots from the chassis of the truck trailer, allowing the wheel to swing up or down in a controlled arc. This enables vertical wheel movement relative to the trailer body, improving ride quality while keeping the cargo stable.

The axle member is not rigidly fixed but is mounted in a suspension system that allows pivoting movement around a horizontal axis.

This type of suspension is suitable for being used in truck trailers where it allows the axle member to adapt to uneven terrain, improving stability and load distribution. The axle member is connected to swing arms or similar components that can rotate or oscillate like a pendulum. It enables vertical movement of the wheels with respect to the truck trailer body, but in a controlled, swinging manner. It helps absorb shocks and maintain better contact between the tires and the ground.

If a truck trailer has a pendulum-suspended axle, then when one wheel hits a bump, the axle can swing slightly to balance the impact, rather than transferring all the shock directly to the vehicle frame.

In an embodiment, the wheel mount arrangement comprises a type 24"/30" brake actuator.

By the term type 24"/30" brake actuator is meant a dual-chamber air brake unit. It combines a service brake (type 24) and a spring brake (type 30) in one housing, enabling both normal and emergency or parking braking functions using compressed air and mechanical spring force. A type 24"/30" brake actuator refers to a combination air brake chamber, suitable for being used in heavy-duty vehicles, including truck trailers. These actuators are crucial components in air brake systems suitable for being used in commercial transport.

A brake actuator (or brake chamber) is a device that converts compressed air pressure into mechanical force to apply the brakes. In a truck trailer, this force pushes a push rod connected to the brake mechanism, rotates a camshaft or similar linkage and expands the brake shoes inside the drum creating friction to slow the wheel.

These numbers in "type 24"/"30"" refer to the size of the diaphragms in the brake chamber, which in turn determines how much braking force is generated at a given air pressure. In a type 24, there is 24 square inches of diaphragm area. Likewise, in a type 30, there is 30 square inches of diaphragm area.

In a 24"/30" brake actuator there is a combination chamber, in which the type 24 is the service brake chamber (used during normal braking) and the type 30 is the spring brake chamber (used for parking and emergency braking via a powerful spring). This combination is suitable for trailer axles.

When the driver presses the brake pedal, air pressure is sent to the service chamber, pushing a diaphragm that applies the brakes of the service brake (type 24).

When air pressure is released (e.g., parking or emergency situation), a large spring in the second chamber (spring brake (type 30)) automatically applies the brakes for safety.

The 24"/30" size is a standard industry specification for balanced braking performance and force although this type 24"/30" brake actuator is relatively space-consuming. It is a challenge to employ a conventional type 24"/30" brake actuator, which is relatively bulky in terms of installation space.

In an embodiment, the brake actuator is mounted on the axle assembly.

In an embodiment, the brake actuator is mounted on the brake chamber bracket of the axle member.

In an embodiment, the brake actuator is mounted on the brake chamber bracket of the axle member, in line with the brake camshaft or slack adjuster mechanism.

In an embodiment, the brake actuator is mounted on the axle member or on a suspension bracket behind a central lateral axis of the wheel.

In an embodiment, the brake actuator is mounted behind or beside the wheel hub.

In an embodiment, the brake actuator is positioned such that a push rod from the actuator connects to a slack adjuster, which then rotates the brake camshaft to engage the brake shoes.

In an embodiment, the brake actuator is directly aligned with the braking mechanism inside the drum brake assembly. This ensures that when air pressure is applied, the linear motion of the actuator's push rod is converted into rotational force on the camshaft hereby expanding the brake shoes against the drum.

In an embodiment, the brake actuator is mounted by using bolts.

In an embodiment, the brake actuator is securely bolted to a mounting bracket.

In an embodiment, the angle of the push rod of the brake actuator is aligned within a range of 85-95° to the slack adjuster at rest to ensure proper brake force and stroke length.

In an embodiment, the truck trailer comprises:
- an electronic braking system having an electronic control unit and
- an air spring having a diameter selected such that, when supporting the truck trailer under normal load conditions, the air pressure required to inflate the air spring to maintain the designed ride height (operating air pressure of the air suspension) remains within the permissible pressure range of the associated pneumatic and electronic components, including brake valves and the electronic control unit of the electronic braking system, and wherein the air spring is further configured to accommodate the vertical travel of the pendulum suspension and to support the axle member in accordance with a bearing configuration of the axle member.

An electronic braking system (EBS), in a truck trailer, refers to an advanced braking system that electronically controls and monitors the trailer's braking functions, replacing or supplementing traditional pneumatic signal systems.

In an EBS-equipped trailer the brake pedal in the towing vehicle sends an electrical signal (instead of just an air pressure signal) to the trailer's electronic control unit. The electronic control unit precisely regulates the brake force on each axle using solenoid valves, pressure sensors, and wheel speed sensors. A pneumatic fallback system is typically included to ensure braking capability in case of electrical failure.

In an embodiment, the trailer EBS system comprises:
- an electronic control unit that controls the brake application electronically and/or
- one or more modulator valves arranged and configured to regulate air pressure to the brake chambers and/or
- one or more anti-lock braking system (ABS) sensors arranged and configured to monitor wheel speed to prevent lockup and/or
- one or more pressure sensors arranged and configured to monitor and control air pressure and/or
- an ISO 7638 connector arranged and configured to electrically interface between the truck and the truck trailer.

An electronic braking system, in a truck trailer:
- enables faster and more accurate braking,
- provides an improved safety and stability, especially under load,
   - enables integration with ABS, roll stability program (RSP), and Electronic Stability Program (ESP) for rollover and skid prevention
- provides diagnostic capability (e.g. brake wear, air pressure faults)
- enables shorter braking distances and better coordination with the towing vehicle

In an embodiment, the wheel comprises a wheel rim that is adapted to fit a tyre having width less than 400 mm. Hereby, it is possible to reduce the installation space required by the wheel

In an embodiment, the tyre has a width L₁ constituting less than 80% of the width W₁ of the wheel mount arrangement.

In an embodiment, the tyre has a width L₁ in the range 295-315 mm.

In an embodiment, the tyre has a width L₁ in the range 305-315 mm.

In an embodiment, the tyre has a width L₁ of 315 mm.

In an embodiment, the tyre has a width L₁ constituting less than 75% of the width W₁ of the wheel mount arrangement.

In an embodiment, the truck trailer comprises a trailer bed having an inner width being at least 1604 mm, preferably at least 1614 mm.

In an embodiment, the truck trailer comprises a trailer bed having an inner width being at least 1614 mm.

In an embodiment, the truck trailer comprises one or more pairs of steerable wheels each having a steering spindle mounted in a number of bearings.

In an embodiment, the truck trailer comprises one or more pairs of steerable wheels each having a steering spindle mounted in three bearings.

In an embodiment, each steerable wheel is mounted in a pendulum suspension. Hereby, no rod steering system is needed

In an embodiment, the truck trailer comprises an electro-hydraulic steering control system comprising a control unit that is connected to a sensor by means of a wired electric connection, wherein the sensor is arranged and configured to detect an angle between a towing truck and a longitudinal axis of the truck trailer.

In an embodiment, the inner space width of the trailer bed is at least 1504 mm, preferably at least 1514 mm. The inner space of the trailer bed extends between opposing pairs of wheels.

In an embodiment, an outer width from the outer side of wheels is in the range 2400-2700 mm, preferably 2542 mm.

In an embodiment, the trailer bed is arranged in height in the range 150-200 mm from ground in a driving operation.

In an embodiment, the truck trailer comprises a positioning unit arranged and configured to:
a) lower the trailer bed into a distance between 50-120 mm from the ground, preferably between 80-100 mm such as 90 mm from ground and/or
b) raise the trailer bed into a distance between 350-410 mm from ground, preferably between 370-390 mm, such as 380 mm from ground.

In an embodiment, the axle member is suspended in a pendulum suspension. Hereby, it is possible to provide a narrow construction and thus minimise the width of the wheel mount arrangement.

In an embodiment, the wheel comprises a wheel rim that is adapted to fit a tyre having width less than 350 mm.

In an embodiment, the wheel comprises a wheel rim that is adapted to fit a tyre having width less than 325 mm.

In an embodiment, the wheel comprises a wheel rim that is adapted to fit a tyre having width less than 300 mm.

In an embodiment, the wheel comprises a wheel rim that is adapted to fit a tyre having width in the range 295-315 mm.

In an embodiment, the wheel comprises a wheel rim that is adapted to fit a tyre having width of 315 mm.

### Description of the Drawings

The invention will become more fully understood from the detailed description given herein below. The accompanying drawings are given by way of illustration only, and thus, they are not limitative of the present invention. In the accompanying drawings:
- Fig. 1: shows a cross-sectional top view of a wheel mount arrangement of a truck trailer according to the invention;
- Fig. 2: shows a top view of a trailer truck according to the invention;
- Fig. 3: shows a side view of a steering knuckle of a steerable wheel of a truck trailer according to the invention;
- Fig. 4A: shows a side view of a truck towering a truck trailer according to the invention;
- Fig. 4B: shows a cross-sectional view of the truck trailer shown in Fig. 4A;
- Fig. 4C: shows another cross-sectional view of the truck trailer shown in Fig. 4A;
- Fig. 5: shows a cross-sectional top view of a wheel mount arrangement of a truck trailer according to the invention;
- Fig. 6: shows a perspective view of a truck trailer according to the invention;
- Fig. 7A: shows a snow chain being mounted on a truck wheel;
- Fig. 7B: shows a snow chain mounted on a truck wheel;
- Fig. 8A: shows a schematic view of an electro-hydraulic steering control system of a truck trailer according to the invention;
- Fig. 8B: shows a schematic cross-sectional view of a wheel mount arrangement of a truck trailer according to the invention;
- Fig. 8C: shows a schematic cross-sectional view of a wheel mount arrangement comprising a standard sized wheel rim;
- Fig. 9A: shows a side view of a prior art wheel mount arrangement;
- Fig. 9B: shows a front view of the wheel mount arrangement shown in Fig. 9A;
- Fig. 10A: shows a cross-sectional rear view of a truck trailer according to the invention in a driving configuration;
- Fig. 10B: shows a cross-sectional rear view of the truck trailer shown in Fig. 10A in another configuration and
- Fig. 10C: shows a cross-sectional rear view of the truck trailer shown in Fig. 10A in a further configuration.

### Detailed description of the invention

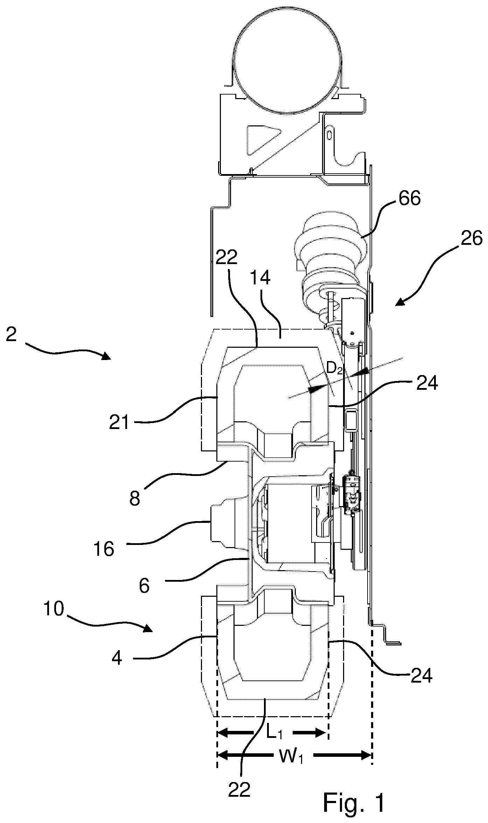

Referring now in detail to the drawings for the purpose of illustrating preferred embodiments of the present invention, a cross-sectional top view of a wheel mount arrangement 2 of a truck trailer of the present invention is illustrated in Fig. 1.

The wheel mount arrangement 2 is designed for a left non-steerable wheel 10 of a truck trailer. The wheel mount arrangement 2 comprising a non-steerable wheel 10. The wheel 10 comprises a tyre 4 mounted on a wheel rim 8 having a mounting plate 6 configured to be attached to an axle member 16 of the truck trailer. The tyre 4 comprises a side portion 22, a rear portion 24 and a front portion 21.

The wheel mount arrangement 2 has a width W₁. The wheel 10 has a width L₁ that is smaller than the width W₁ of the wheel mount arrangement 2. In an embodiment, the tyre 4 and thus the wheel 10 has a width L₁ constituting less than 80% of the width W₁ of the wheel mount arrangement 2. In an embodiment, the tyre 4 and thus the wheel 10 has a width L₁ constituting less than 75% of the width W₁ of the wheel mount arrangement 2. By using a wheel 10 having a width L₁ that is significantly (e.g. more than 20 %) smaller than the width W₁ of the wheel mount arrangement 2, it is possible to provide a space 14 extending along the side portion 22 of the tyre 4 and along the rear portion 24 of the tyre 4, wherein the space 14 is large enough to allow a snow chain 30 to be mounted on the steerable wheel 10 and to drive the truck trailer while the snow chain 30 is mounted on the non-steerable wheel 10.

The distance D₂ between the rear side of the wheel 10 and the pendulum suspension (steering knuckle) 26 is indicated. The distance D₂ is large enough to allow a snow chain 30 to be mounted on the steerable wheel 10 and to drive the truck trailer while the snow chain 30 is mounted on the non-steerable wheel 10. In an embodiment, the distance D₂ between is at least 30 mm. In an embodiment, the distance D₂ between is at least 45 mm. In an embodiment, the distance D₂ between is at least 50 mm. In an embodiment, the distance D₂ between is at least 55 mm.

The wheel mount arrangement 2 comprises a brake actuator 66. In an embodiment, the brake actuator 66 is mounted on the brake chamber bracket of the axle member 16.

In an embodiment, the wheel 10 comprises a wheel rim 8 that is adapted to fit a tyre 4 having width L₁ less than 400 mm.

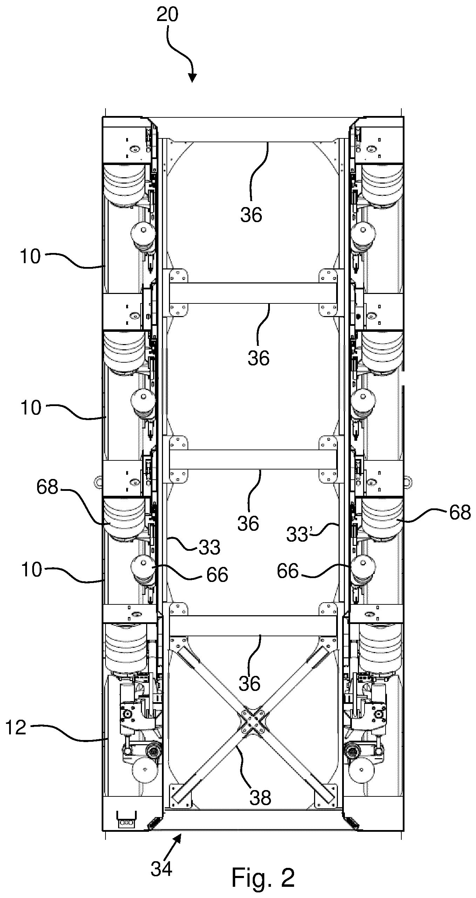

Fig. 2 illustrates a top view of a trailer truck 20 according to the invention. The trailer truck 20 comprises a chassis 34 comprising frame members 36 extending between a left side structure 33 and a right side structure 33'. A pair of steerable wheels 12 are provided at the rear end of the trailer truck 20. The trailer truck 20 comprises three sets of non-steerable wheels 10 arranged in front of the pair of steerable wheels 12.

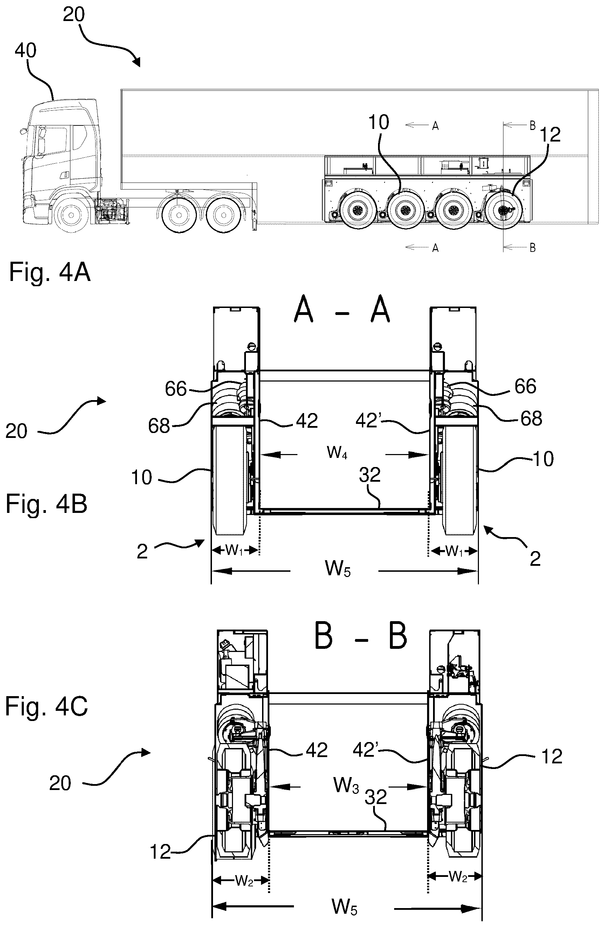

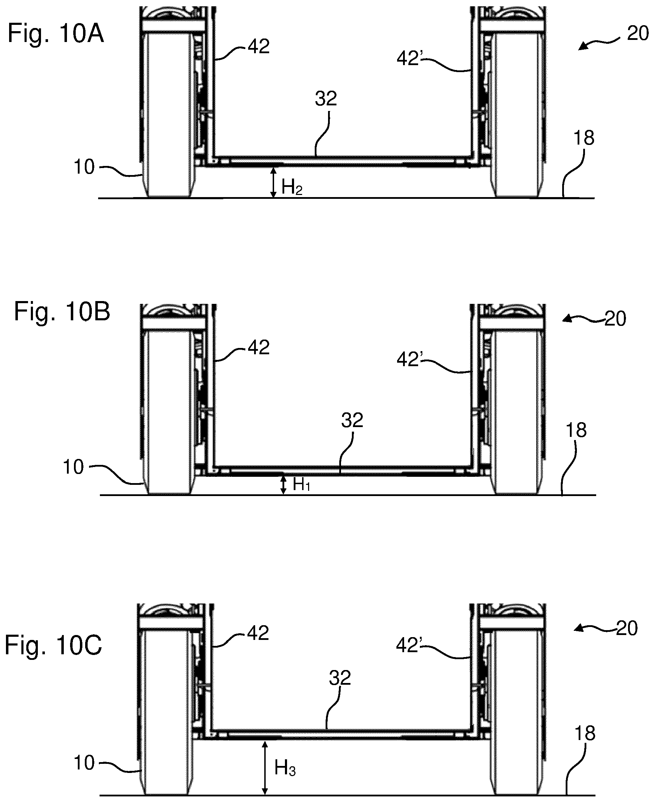

In an embodiment, the trailer truck 20 comprises a trailer bed (see Fig. 4B, Fig. 4C, Fig. 10A, Fig. 10B and Fig. 10C). Each of the wheels 10, 12 is mounted on an axle member that is suspended in a pendulum suspension (see Fig. 1, Fig. 3, Fig. 5 and Fig. 8A for a better view).

Each non-steerable wheels 10 of the trailer truck 20 comprises an air spring 68 configured to accommodate the vertical travel of the pendulum suspension /see Fig. 1) and to support the axle member 16 in accordance with a bearing configuration of the axle member 16.

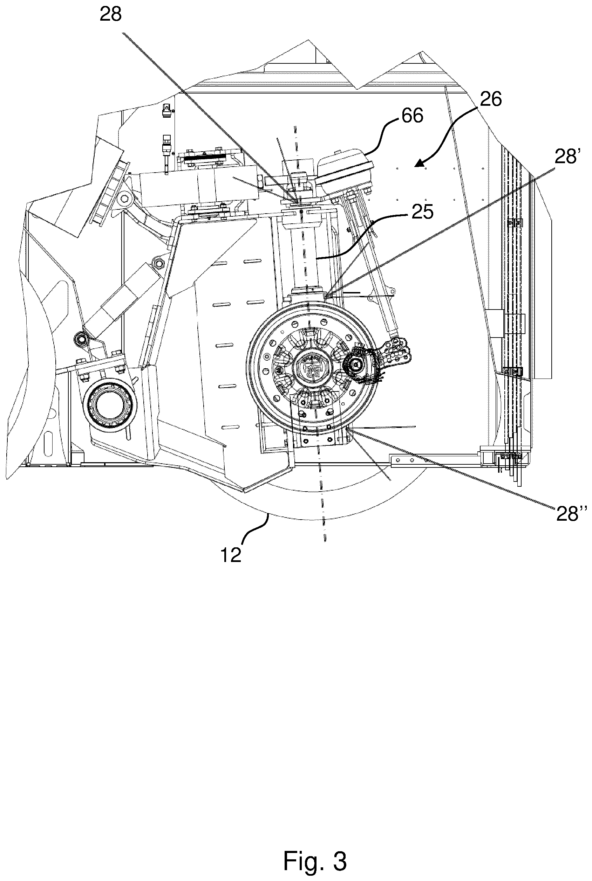

Fig. 3 illustrates a side view of a pendulum suspension (steering knuckle) 26 of a steerable wheel 12 of a truck trailer according to the invention. The pendulum suspension 26 comprises a steering spindle 25 that is mounted by using three bearings 28, 28', 28".

Fig. 4A illustrates a side view of a truck 40 towering a truck trailer 20 according to the invention. The truck trailer 20 comprises at least one pair of steerable wheels 12. The truck trailer 20 also comprises one or more (e.g. three) pairs of non-steerable wheels 10.

Fig. 4B illustrates a cross-sectional view of the truck trailer 20 shown in Fig. 4A. The cross-section is made along the line A-A indicated on Fig. 4A. The truck trailer 20 comprises two wheel mount arrangements 2 each having a width W₁. A non-steerable wheel 10 is arranged in each wheel mount arrangement 2. Each wheel mount arrangement 2 comprises a brake actuator 66 and an air spring 68 as the one shown in and explained with reference to Fig. 1 and Fig. 2.

A trailer bed 32 extends between the two wheel mount arrangements 2. A left wall 42 and a right wall 42' extends upwards from the trailer bed 32. The width W₁ of each wheel mount arrangement 2, the total width W₅ of the truck trailer and the width W₄ of the trailer bed 32 (at the indicated shown in Fig. 4B) are indicated.

In an embodiment, the total width W₅ of the truck trailer 20 is at least 2440 mm. In an embodiment, the total width W₅ of the truck trailer 20 is 2500 mm. In an embodiment, the total width W₅ of the truck trailer 20 is 2542 mm.

In an embodiment, the width W₄ of the trailer bed 32 (at the indicated shown in Fig. 4B) is at least 1500 mm. In an embodiment, the width W₄ of the trailer bed 32 (at the indicated shown in Fig. 4B) is at least 1550 mm. In an embodiment, the width W₄ of the trailer bed 32 (at the indicated shown in Fig. 4B) is at least 1600 mm. In an embodiment, the width W₄ of the trailer bed 32 (at the indicated shown in Fig. 4B) is 1614 mm.

In an embodiment, the width W₁ of each wheel mount arrangement 2 is less than 525 mm. In an embodiment, the width W₁ of each wheel mount arrangement 2 is less than 500 mm. In an embodiment, the width W₁ of each wheel mount arrangement 2 is less than 480 mm. In an embodiment, the width W₁ of each wheel mount arrangement 2 is 464 mm.

Fig. 4C illustrates another cross-sectional view of the truck trailer 20 shown in Fig. 4A. The cross-section is made along the line B-B indicated on Fig. 4A. The truck trailer 20 comprises two steerable wheels 12 each having a width W₂.

A trailer bed 32 extends between the two wheel mount arrangements of the steerable wheels 12. A left wall 42 and a right wall 42' extends upwards from the trailer bed 32. The width W₂ of each wheel mount arrangement, the total width W₅ of the truck trailer and the width W₃ of the trailer bed 32 (at the indicated shown in Fig. 4B) are indicated.

In an embodiment, the total width W₅ of the truck trailer 20 is at least 2440 mm. In an embodiment, the total width W₅ of the truck trailer 20 is 2500 mm. In an embodiment, the total width W₅ of the truck trailer 20 is 2542 mm.

In an embodiment, the width W₃ of the trailer bed 32 (at the indicated shown in Fig. 4B) is at least 1400 mm. In an embodiment, the width W₃ of the trailer bed 32 (at the indicated shown in Fig. 4B) is at least 1450 mm. In an embodiment, the width W₃ of the trailer bed 32 (at the indicated shown in Fig. 4B) is at least 1500 mm. In an embodiment, the width W₃ of the trailer bed 32 (at the indicated shown in Fig. 4B) is 1514 mm.

In an embodiment, the width W₂ of each wheel mount arrangement is less than 575 mm. In an embodiment, the width W₂ of each wheel mount arrangement 2 is less than 550 mm. In an embodiment, the width W₂ of each wheel mount arrangement 2 is less than 520 mm. In an embodiment, the width W₂ of each wheel mount arrangement 2 is 514 mm.

By having a truck trailer 20 as the one illustrated in Fig. 4A, Fig. 4B and Fig. 4C, it is possible to place pallets having a width of 1600 mm in inside the trailer 20 if the pallets are arranged between the non-steerable wheels 10. It is also possible to place pallets having a width of 1500 mm in inside the trailer 20 if the pallets are arranged between the steerable wheels 12.

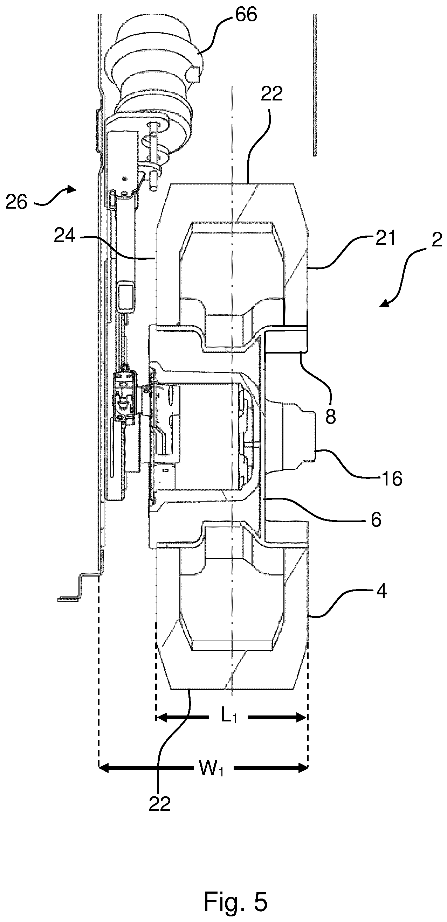

Fig. 5 illustrates a cross-sectional top view of a wheel mount arrangement 2 of a truck trailer according to the invention. The wheel mount arrangement 2 is for a right non-steerable wheel. The wheel mount arrangement 2 basically corresponds to the one shown in and explained with reference to Fig. 1, apart from the fact that the structures are reversed compared to Fig. 1.

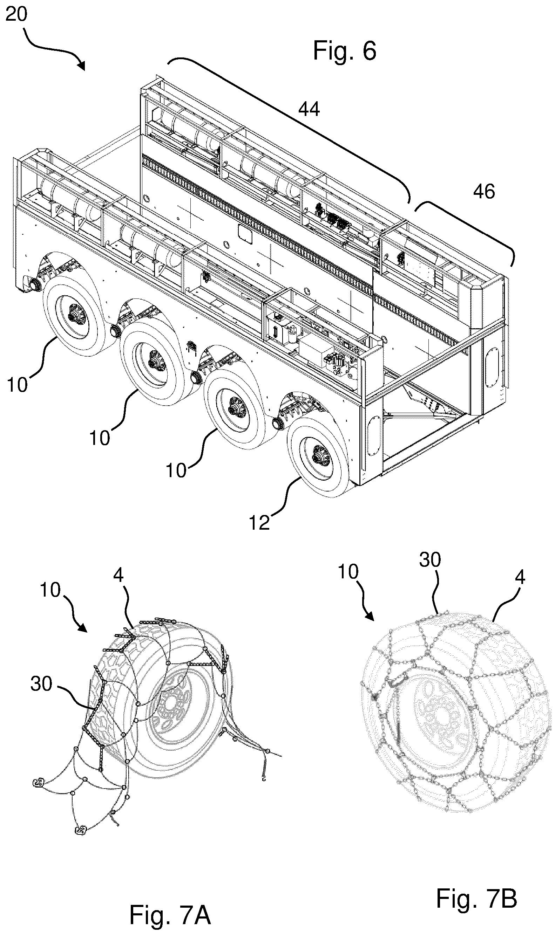

Fig. 6 illustrates a perspective view of a truck trailer 20 according to the invention. The truck trailer 20 corresponds to the one shown in and explained with reference to Fig. 4A, Fig. 4B and Fig. 4C. The truck trailer 20 comprises three pairs of non-steerable wheels 10, each arranged in a wheel mount arrangement according to the invention. The truck trailer 20 comprises a single pair of steerable wheels 12.

Although the bottom plate of the trailer bed has been removed, it can be seen that the rear portion of the trailer constitutes a narrow portion 46 in which the width of the trailer bed is smaller than the width of the trailer bed in the wide portion 44 arranged in front of the narrow portion 46.

Fig. 7A illustrates a snow chain 30 being mounted on the tyre 4 of a truck wheel 10.

Fig. 7B illustrates a snow chain 60 mounted on the tyre 4 of a truck wheel 10.

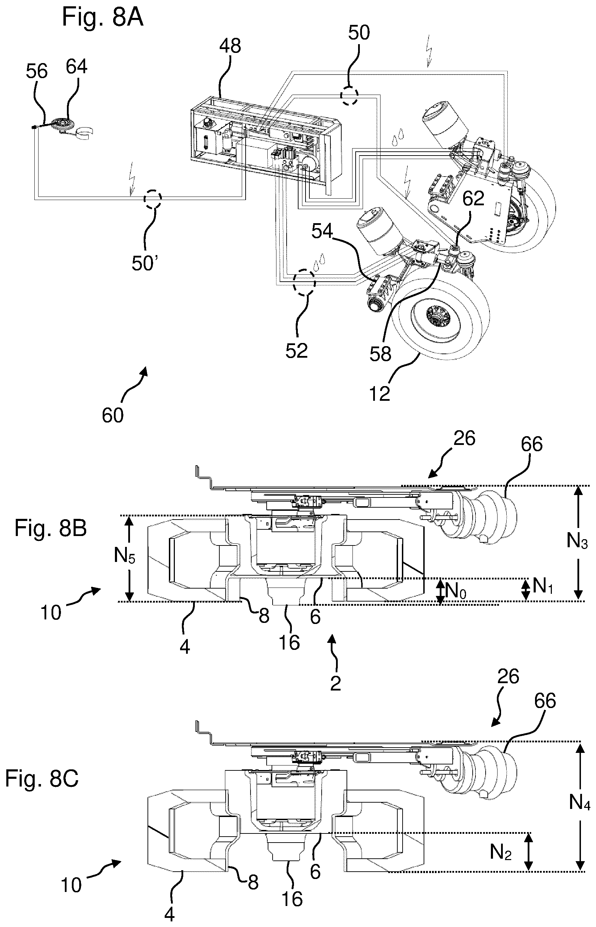

Fig. 8A illustrates a schematic view of an electro-hydraulic steering control system 60 of a truck trailer according to the invention. The electro-hydraulic steering control system 60 comprises a control unit 48 that is connected to a sensor 56 by means of a wired electric connection 50'. The sensor 56 is arranged and configured to detect the angle between the towing truck (not shown) and the (longitudinal axis of the) truck trailer. The sensor 56 is configured to be arranged at the kingpin 64 at the front portion of the chassis of the truck trailer.

The trailer comprises a steering assembly by means of which the corresponding steerable wheels 12 are mounted to the chassis) not shown) of the trailer. The steering assembly comprises a hydraulic actuator (a hydraulic cylinder) 58 that, at the distal end, is attached to a protruding member of an arm portion that is attached to a rotatably mounted steering spindle. The steering spindle is attached to a receiving structure (not shown) at its free end. The receiving structure is arranged and configured to receive a mounting structure (not shown), by which the steerable wheel 12 can be attached to the steering assembly.

The steering assembly comprises a sensor 62 arranged and configured to determine the angle between the driving direction of the wheel 12 (not shown) and the direction of the longitudinal axis of the trailer. The control unit 30 receives signals detected by the sensor 62 via the wired electric connection 50.

The actuator 58 is controlled by the control unit 48 on the basis of the control signals received from the sensor 56 at the kingpin 64 and control signals from the sensor 62 arranged at the steering spindle. The control unit 48 is connected to the actuator by means of a hydraulic connection 52. In one embodiment, the control unit 30 comprises or is in fluid communication with a hydraulic pressure source. Accordingly, the control unit 48 can control the actuator 58 via the hydraulic connection 52.

The sensor 62 is used to ensure that the rotational displacement caused by the activation of the actuator 56 corresponds to the rotational displacement of the trailer detected by the sensor 56 at the kingpin 64. In this manner the actuator 58 receives "feedback signals" from the sensor 62 arranged at the steering spindle.

In one embodiment, the actuator 58 is controlled on the basis of one or more control signals from an angle sensor 56 arranged at the kingpin 64 to detect the angle between the towing truck and the trailer.

Each of the wired connections 50, 50' may be replaced by a wireless connection comprising a transmitter and a receiver.

In a preferred embodiment, the vertical position of the steering assembly can be regulated by means of a regulation assembly (not shown). The attachment structure 54 is arranged and configured to be attached to the chassis of the trailer. Hereby, the vertical position of the steering assembly relative to the attachment structure 52 (and thus the chassis) can be regulated.

Fig. 8B illustrates a schematic cross-sectional view of a wheel mount arrangement 2 according to the invention, while Fig. 8C illustrates a schematic cross-sectional view of a wheel mount arrangement comprising a standard sized wheel rim 8.

The wheel mount arrangement 2 shown in Fig. 8B corresponds to the one shown in and explained with reference to Fig. 1. The wheel mount arrangement 2 has a width N₃ that is smaller than the width N₄ of the wheel mount arrangement shown in Fig. 8C. The width N₀ at with the 16 protrudes from the mounting plate 16 is indicated. In an embodiment, the width N₀ is in the range 90-115 mm. In an embodiment, the width N₀ is in the range 95-110 mm. In an embodiment, the width N₀ is in the range 100-107 mm. In an embodiment, the width N₀ is 105 mm. The wheel rim 8 of the wheel mount arrangement 2 shown in Fig. 8B has a width N₅. In an embodiment, the width N₅ is in the range 300-330 mm. In an embodiment, the width N₅ is in the range 310-320 mm. In an embodiment, the width N₅ is 315 mm.

In the wheel mount arrangement 2 shown in Fig. 8B, the distance N₁ from the front portion of the tyre 4 to the front portion of the mounting plate 6 is smaller than the distance N₂ from the front portion of the tyre 4 to the front portion of the mounting plate 6 of the wheel mount arrangement 2 shown in Fig. 8C. The lower distance N₁ is achieved by providing a compressed version of the standard sized wheel rim 8 shown in Fig. 8C. In Fig. 8C the center plane of the tyre 4 and the mounting plate 6 are basically aligned. In an embodiment, the distance N₁ is in the range 75-95 mm. In an embodiment, the distance N₁ is in the range 80-90 mm. In an embodiment, the distance N₁ is 85 mm.

In an embodiment, the N₁ is larger than or equal to 120% of N₀. In an embodiment, the N₁ is larger than or equal to 115% of N₀. In an embodiment, the N₁ is larger than or equal to 110% of N₀.

In an embodiment, N₁ is equal to or smaller than 25% of N₃. In an embodiment, N₁ is equal to or smaller than 22% of N₃. In an embodiment, N₁ is equal to or smaller than 20% of N₃.

In an embodiment, the ration N₅/N₁ is in the range 3.1-4.5. In an embodiment, the ration N₅/N₁ is in the range 3.3-4.3. In an embodiment, the ration N₅/N₁ is in the range 3.5-4.1. In an embodiment, the ration N₅/N₁ is in the range 3.6-4.0. In an embodiment, the ration N₅/N₁ is in the range 3.65-3.58. In an embodiment, the ration N₅/N₁ is 3.7.

By providing a narrow wheel rim 8 as the one shown in Fig. 8B, it is possible to limit the width N₃ of the wheel mount arrangement 2. Accordingly, by using a wheel mount arrangement 2 according to the invention, it is possible to increase the width of the trailer bed.

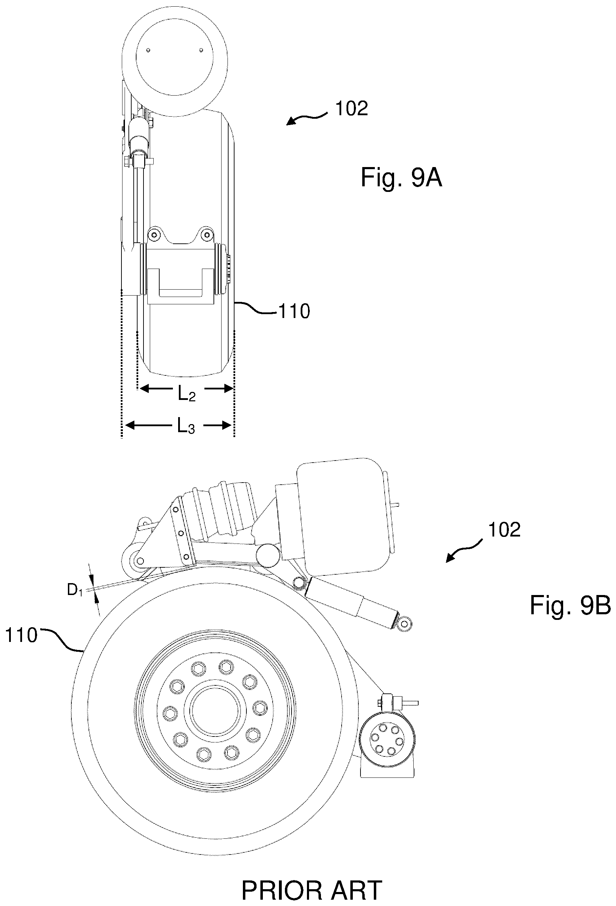

Fig. 9A illustrates a side view of a prior art wheel mount arrangement 102. The prior art wheel mount arrangement 102 comprises a non-steerable wheel 110 having a width L₂. The width L₃ of the wheel mount arrangement 110 is indicated. It can be seen that the width L₂ of the non-steerable wheel 110 constitutes more than 80% of the width L₃ of the wheel mount arrangement 110.

Fig. 9B illustrates a front view of the prior art wheel mount arrangement 102 shown in Fig. 9A. The distance D₁ indicated the space between the wheel 110 and the components of the wheel mount arrangement. It can be seen that the distance D₁ is very small (less than 5 mm). Accordingly, it is not possible to mounted a snow chain on the wheel 110 and to drive the truck trailer while a snow chain mounted on the wheel 110.

Fig. 10A illustrates a cross-sectional rear view of a truck trailer 20 according to the invention in a driving configuration (the configuration used when driving with the truck trailer). The truck trailer 20 comprises a trailer bed 32 extending between a left wall 42 and a right wall 42'. The truck trailer 20 comprises a pair of non-steering wheels 10 arranged in a wheel mount arrangement according to the invention. The wheels 10 are placed on the ground 18. The bottom side of the trailer bed 32 is arranged in a height H₂ over the ground 18.

Since the use of wheel mount arrangements according to the invention eliminates the use of a mechanically rod steering system. The truck trailer according to the invention requires no steering rod. Accordingly, it is possible to lower the height H₂ at which the bottom side of the trailer bed 32 is arranged over the ground 18 when driving the trailer.

In an embodiment, the height H₂ is in the range 160-220 mm. In an embodiment, the height H₂ is in the range 170-210 mm. In an embodiment, the height H₂ is in the range 180-200 mm. In an embodiment, the height H₂ is 190 mm.

The wheel mount arrangement may comprise an air cushion (not sown) arranged and configured to lower the trailer bed 32 as shown in Fig. 10 B and raise the trailer bed 32 as shown in Fig. 10 C. The volume of the air cushion may be controlled by using a level valve. By setting the level valve to a specific level, the volume of the air cushion will adapt to the specified level of the level valve. The air pressure system of the truck or truck trailer may be used to introduce a flow into and out of the air cushion.

Fig. 10B illustrates a cross-sectional rear view of the truck trailer 20 shown in Fig. 10A in a configuration, in which the height H₁ at which the bottom side of the trailer bed 32 is arranged over the ground 18 has been reduced compared with the driving configuration shown in Fig. 10A. This is relevant during loading an unloading of the truck trailer.

In an embodiment, the height H₁ is in the range 60-120 mm. In an embodiment, the height H₁ is in the range 70-110 mm. In an embodiment, the height H₁ is in the range 80-1000 mm. In an embodiment, the height H₁ is 90 mm.

Fig. 10C illustrates a cross-sectional rear view of the truck trailer shown in Fig. 10A in a configuration, in which the height H₃ at which the bottom side of the trailer bed 32 is arranged over the ground 18 has been raised compared with the driving configuration shown in Fig. 10A and Fig. 10B. This is relevant during loading and unloading of the truck trailer

In an embodiment, the height H₃ is in the range 350-430 mm. In an embodiment, the height H₃ is in the range 370-410 mm. In an embodiment, the height H₃ is in the range 380-400 mm. In an embodiment, the height H₃ is 390 mm.

### List of reference numerals

- 2: Wheel mount arrangement
- 4: Tire
- 6: Mounting plate (of the wheel rim)
- 8: Wheel rim
- 10: Non-steerable wheel
- 12: Steerable wheel
- 14: Space
- 16: Axle member
- 18: Ground
- 20: Truck trailer
- 21: Front portion
- 22: Side portion
- 24: Rear portion
- 25: Steering spindle
- 26: Pendulum suspension (steering knuckle)
- 28, 28', 28": Bearing
- 30: Snow chain
- 32: Trailer bed
- 33: Left side structure
- 33': Right side structure
- 34: Chassis
- 36: Frame member
- 38: Cross structure
- 40: Truck
- 42: Left wall
- 42': Right wall
- 44: Wide portion
- 46: Narrow portion
- 50, 50': Electric connection
- 52: Hydraulic connection

- 54: Attachment structure
- 56: Sensor
- 58: Actuator
- 60: Electro-hydraulic steering control system
- 62: Angle (or rotation) sensor
- 64: Kingpin
- 66: Brake actuator
- 68: Air spring
- 102: Prior art wheel mount arrangement
- 110: Prior art non-steerable wheel
- D₁, D₂: Distance
- W₁, W₂, W₃, W₄, W₅: Width
- L₁, L₂, L₃: Width
- H₁, H₂, H₃: Height
- N₀, N₁, N₂, N₃, N₄, N₅: Distance (e.g. width)

## Claims

1. A truck trailer (20) comprising a having a chassis (34), a trailer bed (32), several non-steerable wheels (10) and a wheel mount arrangement (2) for each non-steerable wheel (10), wherein each wheel mount arrangement (2) comprises a non-steerable wheel (10) that comprises a tyre (4) mounted on a wheel rim (8) having a mounting plate (6) configured to be attached to an axle member (16) of the truck trailer (20),
wherein the tyre (4) comprises:
- a side portion (22) comprising the part of the tyre (4) that contacts the ground during driving; and
- a rear portion (24) facing towards a side structure (33, 33') of the chassis (34) and extending between the side portion (22) and the wheel rim (8),
wherein the wheel mount arrangement (2) has a width (W₁) extending between a front portion (21) of the tyre (4) and the nearest side structure (33, 33') of the chassis (34),
wherein the axle member (16) is suspended in a pendulum suspension (26), wherein the axle member (16) is connected to or supported by the pendulum suspension (26) at one end, wherein the axle member (16) extends outward from the pendulum suspension (26) to the wheel (10), where the non-steerable wheel (10) is physically attached to the axle member (16),
**characterised in that** the wheel mount arrangement (2) comprises a:
- space (14) extending along the side portion (22) of the tyre (4) and along the rear portion (24) of the tyre (4), said space situated between said pendulum suspension (26) and on the other side said side portion (22) and said rear portion (24), wherein the width (D₂), of the space (14) is at least 20 mm and configured to enable a snow chain (30) to be mounted onto the non-steerable wheel (10) and to drive the truck trailer (20) while the snow chain (30) is mounted onto the non-steerable wheel (10).

2. The truck trailer (20) according to claim 1, wherein the wheel mount arrangement (2) comprises a type 24"/30" brake actuator (66).

3. The truck trailer (20) according to claim 1 or 2, comprising:
- an electronic braking system having an electronic control unit and
- an air spring (68) having a diameter selected such that, when supporting the truck trailer (20) under normal load conditions, the air pressure required to inflate the air spring (68) to maintain the designed ride height (operating air pressure of the air suspension) remains within the permissible pressure range of the associated pneumatic and electronic components, including brake valves and the electronic control unit of the electronic braking system, and wherein the air spring (68) is further configured to accommodate the vertical travel of the pendulum suspension (26) and to support the axle member (16) in accordance with a bearing configuration of the axle member (16).

4. The truck trailer (20) according to one of the preceding claims, wherein the wheel (10) comprises a wheel rim (8) that is adapted to fit a tyre (4) having width less than 400 mm.

5. The truck trailer (20) according to one of the preceding claims, wherein the tyre (4) has a width (L₁) constituting less than 80% of the width (W₁) of the wheel mount arrangement (2).

6. The truck trailer (20) according to one of the preceding claims, wherein the truck trailer (20) comprises a trailer bed (32) having an inner width (W₄) being at least 1604 mm, preferably at least 1614 mm.

7. The truck trailer (20) according to one of the preceding claims, comprising one or more pairs of steerable wheels (12) each having a steering spindle (25) mounted in three bearings (28, 28', 28").

8. The truck trailer (20) according to claim 7, wherein each steerable wheel (12) is mounted in a pendulum suspension (26).

9. The truck trailer (20) according to one of the claims 7-8 comprising an electro-hydraulic steering control system (60) comprising a control unit (48) that is connected to a sensor (56) by means of a wired electric connection (50'), wherein the sensor (56) is arranged and configured to detect an angle between a towing truck (40) and a longitudinal axis of the truck trailer (20).

10. The truck trailer (20) according to one of the preceding claims, wherein the inner space width (W₄) of the trailer bed (32) is at least 1504 mm, preferably at least 1514 mm

11. The truck trailer (20) according to one of the preceding claims, wherein an outer width (W₅) from the outer side of wheels (10) is in the range 2400-2700 mm, preferably 2542 mm.

12. The truck trailer (20) according to one of the preceding claims, wherein the trailer bed (32) is arranged in height (H₂) in the range 150-200 mm from ground (18) in a driving operation.

13. The truck trailer (20) according to one of the preceding claims, comprising a positioning unit (30) arranged and configured to:
a) lower the trailer bed (32) into a distance between 50-120 mm from the ground (18), preferably between 80-100 mm such as 90 mm from ground (18) and/or
b) raise the trailer bed (32) into a distance between 350-410 mm from ground (18), preferably between 370-390 mm, such as 380 mm from ground (18).
